# EUROPÄISCHE PATENTSCHRIFT

(11) **EP 4 461 987 B1**
(45) Veröffentlichungstag und Bekanntmachung des Hinweises auf die Patenterteilung: **29.10.2025**
(21) Anmeldenummer: 23172132.5
(22) Anmeldetag: 08.05.2023
(51) Int. Cl.: F16F 9/48, F16F 9/53, F16F 9/32, F16F 9/18, B62K 3/00, B62K 21/20, B62K 25/04, B62J 45/41, F16F 9/42, F16F 9/20

(54) **STOSSDÄMPFER**
SHOCK ABSORBER
AMORTISSEUR DE CHOCS

(43) Veröffentlichungstag der Anmeldung: 13.11.2024
(73) Patentinhaber: Driveman GmbH, 58339 Breckerfeld (DE)
(72) Erfinder: Schnippering, Axel, 58339 Breckerfeld (DE); Wiegand, Andreas, 58579 Dahlerbrück (DE)
(74) Vertreter: Patentanwälte Dörner & Kötter PartG mbB

(56) Entgegenhaltungen:
- EP-A1- 4 019 381
- CN-U- 206 159 348
- DE-A1- 102011 117 793
- DE-A1- 102017 008 752
- DE-U1- 202023 102 485
- GB-A- 191 316 632
- JP-A- H10 259 845
- JP-U- H0 632 781
- RU-C2- 2 256 832
- US-A- 4 738 339
- US-A- 4 741 516
- US-A- 4 749 071
- US-A- 5 398 786
- US-A1- 2005 077 131
- US-A1- 2015 152 934
- US-A1- 2016 201 751
- US-A1- 2019 153 740

## Beschreibung

Die Erfindung betrifft einen Stoßdämpfer, insbesondere für Radfahrzeuge, nach dem Oberbegriff des Patentanspruchs 1. Die Erfindung betrifft weiterhin ein Radfahrzeug nach dem Patentanspruch 11.

Stoßdämpfer kommen unter anderem bei Fahrwerken von Radfahrzeugen im Verbund mit einer Federung zum Einsatz, um Schwingungen der gefederten Masse zu dämpfen und dadurch schnell abklingen zu lassen. Korrekter wäre die Bezeichnung "Schwingungsdämpfer", da nicht der Stoß selbst, sondern dessen Wirkung beeinflusst wird. Stoßdämpfer dienen nicht dem Abfangen von Fahrbahnunebenheiten ins Fahrzeug eingeleiteten Stößen; die Aufgabe kommt der Federung zu. Stoßdämpfer haben die Aufgabe, Schwingungen des Fahrzeugaufbaus auf die Tragfederung sowie auch Schwingungen der Räder auf die Reifenfederung zu dämpfen. Die primäre Aufgabe einer Feder innerhalb der Federung liegt darin, der Masse des Fahrzeugaufbaus und des Fahrers entgegenzuwirken. Bei Zweiradfahrzeugen kommen regelmäßig Spiralfedern zum Einsatz. Die Federkraft einer Spiralfeder weist im Regelfall einen linearen Verlauf zum eingefederten Weg auf. Sie befindet sich zu Beginn einer Belastung in einem Ruhezustand und trägt das Gewicht von Fahrzeug und Fahrer. Eine niedrige Federkonstante (Federrate) sorgt für ein komfortables Fahrgefühl. Während des Federweges erhöht sich die Federkraft. Eine niedrige und komfortable Federkonstante ermöglicht aber ein schnelles und einfaches Durchschlagen. Eine hohe Federkonstante hingegen verringert das Durchschlagen, verschlechtert aber den Fahrkomfort. Leichte bis mittlere Stöße durch Straßenunebenheiten werden durch eine höhere Federkonstante weniger absorbiert, und über das Fahrzeug an den Fahrer durchgeleitet. Der Negativfederweg (Zugstufe), ergibt sich durch die Auflastung von Fahrer und Fahrzeug. Eine weitere Einfederung (Druckstufe) erfolgt durch die Einwirkungen der Fahrbahnunebenheiten. Über die Einstellung der Vorspannung der Spiralfeder kann das Fahrergewicht angepasst werden.

Durch eine Auslegung eines Stoßdämpfers in Zugrichtung und in Druckrichtung kann die Fahrdynamik und damit der Fahrkomfort beeinflusst werden. Innerhalb der Zugstufe eines Stoßdämpfers wird eine Fahrzeugfederung in dem Entspannungsvorgang innerhalb einer Schwingung gedämpft. In der Druckstufe erfolgt eine Dämpfung der Einfedergeschwindigkeit.

Stoßdämpfer sind im Fahrzeugbereich regelmäßig hydraulische Teleskopstoßdämpfer. Diese beruhen auf dem Prinzip, dass die Widerstandskraft gegen das Fließen des verdrängten Öls von der Fließgeschwindigkeit abhängt. In dem Stoßdämpfer wird Öl über einen Kolben durch enge Bohrungen und Ventilsysteme gepresst. Die Dämpfungskraft, die der Dämpfergeschwindigkeit entgegenwirkt, steigt mit zunehmender Ein- bzw. Ausfedergeschwindigkeit des Kolbens progressiv an.

Nachteilig an den vorbekannten hydraulischen Stoßdämpfern (die, wie oben ausgeführt tatsächlich Schwingungsdämpfer sind) ist, dass diese in einer Feder-Dämpfer-Anordnung die Stoßdämpfungswirkung der Feder in ihrem freischwingenden Mittelbereich durch ihre Schwingungsdämpfung beeinträchtigen. Dabei ist die Beeinträchtigung abhängig von der Geschwindigkeit des Kolbens. Ein gattungsgemäßer Stoßdämpfer ist beispielsweise in der US 2019/0153740 A1 beschrieben, welcher die Merkmale des Oberbegriffs des Anspruchs 1 offenbart.

Die US2015152934A1 offenbart einen weiteren bekannten Stoßdämpfer.

Hier will die Erfindung Abhilfe schaffen. Der Erfindung liegt die Aufgabe zu Grunde, einen Stoßdämpfer bereitzustellen, bei dem eine Beeinträchtigung der Stoßdämpfungswirkung einer angeordneten Federung in ihrem freischwingenden Mittelbereich vermieden ist. Gemäß der Erfindung wird diese Aufgabe durch einen Stoßdämpfer mit den Merkmalen des Patentanspruchs 1 gelöst.

Mit der Erfindung ist ein Stoßdämpfer bereitgestellt, bei dem eine Beeinträchtigung der Stoßdämpfungswirkung einer angeordneten Federung in ihrem freischwingenden Mittelbereich minimiert ist. Dadurch, dass die Kolbenstange durch den Zylinder hindurchgeführt ist und beabstandet zueinander mit zwei Kolben versehen ist, in die umlaufend radial beabstandet zu der Kolbenstange Axialbohrungen eingebracht sind und an deren Außenseite jeweils eine Verschlussscheibe zum Verschließen der Axialbohrungen des zugeordneten Kolbens auf der Kolbenstange axial beweglich gelagert ist, wobei die Zylinderinnenwand zumindest bereichsweise einen sich in Axialrichtung stetig ändernden Durchmesser aufweist, ist eine wegabhängige Dämpfung erzielt, über die eine Minimierung der Schwingungsdämpfung im freischwingenden Mittelbereich einer Federung ermöglicht ist.

Bei Bewegung der Kolbenstange in eine Richtung wird gegen das in dem Zylinder befindliche Fluid durch den in Bewegungsrichtung vorderen Kolben komprimiert. Hierdurch wird die vor diesem angeordnete Verschlussscheibe gegen den Kolben gepresst, wodurch die in dem Kolben befindlichen Axialbohrungen verschlossen werden. Das Fluid wird durch den zwischen dem Kolben und der Innenwand des Zylinders begrenzten Ringspalt hindurchgepresst. Durch den zumindest bereichsweise sich in Axialrichtung ändernden Innendurchmesser des Zylinders ist eine sich über den Weg ändernde Breite des zwischen dem Kolben und der Innenwand des Zylinders gebildeten Ringspalts erzielt, wodurch wiederum eine sich über den Weg veränderliche Dämpfung bewirkt. Das Fluid kann anschließend ungehindert durch die Axialbohrungen des anderen Kolbens hindurchfließen, wobei die diesem zugeordnete Verschlussscheibe durch das Fluid von dem Kolben weggedrängt wird.

In Weiterbildung der Erfindung weist die Zylinderinnenwand in einem ersten Bereich einen in Axialrichtung sich konisch erweiternden und in einem sich anschließenden zweiten Bereich einen sich konisch verjüngenden Bereich auf. Hierdurch ist ein in beide Bewegungsrichtungen der Kolbenstange gleiches Dämpfungsverhalten erzielbar. Vorzugsweise sind die beiden Bereiche spiegelgleich zueinander ausgebildet.

Die Zylinderinnenwand ist durch die Innenwand einer in den Zylinder eingebrachten Dämpferhülse gebildet. Hierdurch ist eine vereinfachte Fertigung ermöglicht. Dabei kann die Dämpferhülse auch zweiteilig zusammengesetzt und/oder aus einem von dem Zylinder verschiedenen Werkstoff hergestellt sein. Hierbei können auch zwei Identische Dämpferhülsenhälften zum Einsatz kommen, die um 180° zueinander verschwenkt in den Zylinder eingesetzt sind. Alternativ können auch zwei unterschiedlich ausgebildete Dämpferhülsenhälften zum Einsatz kommen, die um 180° zueinander verschwenkt in den Zylinder eingesetzt werden, um die unterschiedlichen Einwirkungen von Zug- und Druckstufe optimal zu steuern.

In weiterer Ausgestaltung der Erfindung ist die Dämpferhülse aus einem thermoplastischen Kunststoff, vorzugsweise Polyamid hergestellt. Durch die Elastizität des Kunststoffes, vorgegeben durch die mechanischen Materialeigenschaften des zugehörigen E-Modul Wertes, ist eine druckabhängige Vergrößerung des Ringspaltes zwischen Kolben und Dämpferhülse einstellbar. Durch die Verwendung unterschiedlicher Kunststoffe mit verschiedenen E-Modul Werten der Dämpferhülsenhälften lassen sich weitere unterschiedliche Dämpfereigenschaften in Zug- und Druckstufe erzielen.

In Weiterbildung der Erfindung ist der Außendurchmesser der Dämpferhülse kleiner, als der Innendurchmesser des Zylinderrohrs, wodurch ein Mantelspalt gebildet ist. Durch die Bildung des Mantelspaltes wird ein Raum geschaffen, in dem sich der Kunststoff der Dämpferhülsen bei zunehmendem Druck ausweiten kann, um den Ringspalt zwischen Kolben und Dämpferhülsen zu erweitern. Je höher die Kolbengeschwindigkeit ist, umso höher steigt der Druck in der Dämpferhülse, wodurch eine Vergrößerung des Ringspaltes (mit Verkleinerung des Mantelspaltes) bewirkt ist. Durch den so vergrößerten Ringspalt kann das komprimierte Fluid leichter abfließen. Bei geeigneter Wahl der Materialelastizität (E-Modul Wert des Kunststoffes) funktioniert die Dämpferhülse wie ein Überdruckventil - der Dämpfer verliert seine Abhängigkeit von der Geschwindigkeit und nimmt nahezu eine reine Wegeabhängigkeit an.

In Ausgestaltung der Erfindung weisen die beiden Kolben auf ihrer der jeweiligen Verschlussscheibe zugewandten Außenseite einen axial sich konisch verjüngenden Abschnitt auf. Hierdurch ist ein verbessertes Einfließverhalten des Fluids in den Ringspalt zwischen Kolben und Zylinderinnenwand bewirkt. Bevorzugt sind die beiden Kolben im Wesentlichen zueinander spiegelgleich ausgebildet.

In weiterer Ausgestaltung der Erfindung sind in dem Zylinder steuerbare Temperiermittel zur Erwärmung und/oder Kühlung des Fluids angeordnet. Hierdurch ist die Temperatur des Fluids und damit seine Viskosität definiert änderbar, wodurch das Dämpfungsverhalten zusätzlich veränderbar ist.

In Weiterbildung der Erfindung sind die Temperiermittel innerhalb der Kolbenstange angeordnet. Hierdurch ist eine gleichmäßige Erwärmung und/oder Kühlung des Fluids radial nach außen erzielt. Alternativ oder zusätzlich können die Temperiermittel auch an der Zylinderinnenwand positioniert sein.

In Ausgestaltung der Erfindung umfassen die Temperiermittel eine Heizpatrone, die mit einer Schnittstelle zum Anschluss an eine Stromquelle verbunden ist. Hierdurch ist der Anschluss an eine außenliegende Batterie ermöglicht. Bevorzugt ist eine Steuereinrichtung angeordnet, welche die an dem Heizdraht der Heizpatrone anliegende Spannung einstellbar ist. Hierdurch ist die Einstellung einer bedarfsgerechten Temperatur zur Einstellung des Dämpfungsverhaltens des Stoßdämpfers ermöglicht. Bei einer Heizpatrone handelt es sich um einen kleinen Elektroheizkörper, der thermische Energie zur Verfügung stellt. Alternativ oder zusätzlich können die Temperiermittel auch eine Kühleinrichtung wie beispielsweise ein Peltier-Element aufweisen.

In weiterer Ausgestaltung der Erfindung ist ein Temperatursensor zur direkten oder indirekten Messung der Fluidtemperatur angeordnet. Hierdurch ist eine Erfassung der Fluidtemperatur zur Steuerung oder Regelung der Temperiermittel ermöglicht. Eine indirekte Erfassung der Fluidtemperatur kann beispielweise durch eine Messung der Zylinder- oder der Dämpferhülsentemperatur erfolgen.

Gegenstand der Erfindung ist weiterhin ein Radfahrzeug, insbesondere Zweiradfahrzeug mit den Merkmalen des Patentanspruchs 11.

In Weiterbildung der Erfindung ist das Radfahrzeug ein Zweirad, insbesondere Elektroroller, der eine Lenkstange aufweist, in der zur Dämpfung von Stößen ein Stoßdämpfer nach einem der Ansprüche 1 bis 10 angeordnet ist. Vorteilhaft ist der Stoßdämpfer gemeinsam mit einer Feder in einer Feder-Dämpfer-Anordnung in der Lenkstange hintereinander angeordnet. Hierdurch ist eine kompakte Gestaltung des Zweirades ermöglicht.

Der Einsatzbereich des erfindungsgemäßen Stoßdämpfers ist nicht auf Fahrzeuge und insbesondere auch nicht auf Zweiradfahrzeuge beschränkt. Vielmehr ergeben sich auch andere Einsatzfelder wie beispielsweise im Bereich der Schwingungsdämpfung von Maschinen. Auch ein Einsatz im Bereich des Bauwesens, beispielsweise für hohe Bauwerke oder auch erdbebensichere Gebäude ist denkbar.

Andere Weiterbildungen und Ausgestaltungen der Erfindung sind in den übrigen Unteransprüchen angegeben. Ausführungsbeispiele sind in den Zeichnungen dargestellt und werden nachfolgend im Einzelnen beschrieben. Es zeigen:
- Figur 1:: die schematische Darstellung eines Stoßdämpfers
a) in einer Seitenansicht;
b) in der Vorderansicht
c) in einer zweiten Seitenansicht;
d) im Längsschnitt;
- Figur 2:: die Darstellung des Stoßdämpfers aus Figur 1 in Explosionsdarstellung;

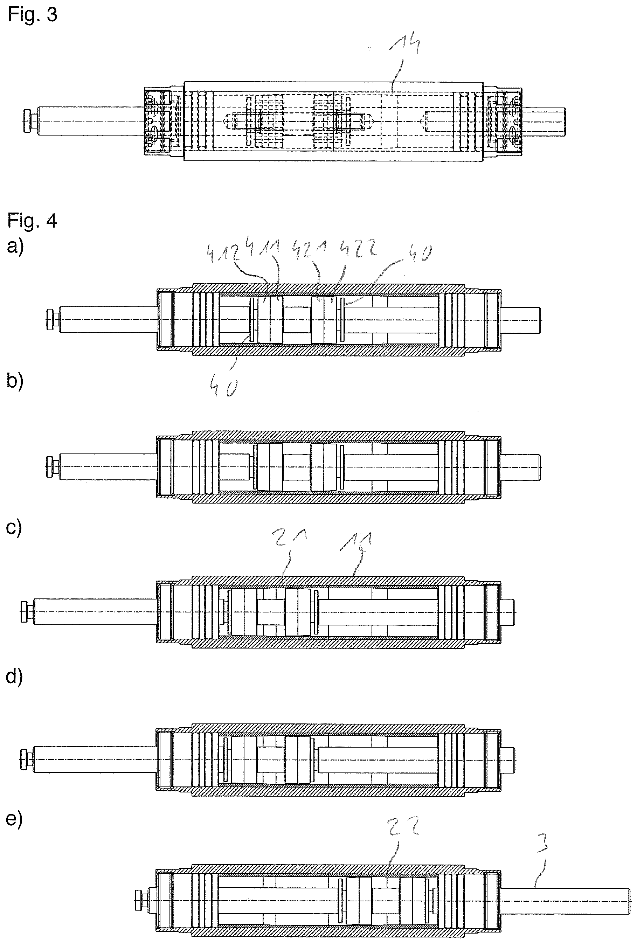

- Figur 3:: den Stoßdämpfer aus Figur 1 in transparenter Darstellung;
- Figur 4:: die Darstellung des Stoßdämpfers aus Figur 1
a) in Neutralstellung;
b) in einer Stellung in Zugbelastung:
c) in Endstellung Zugstufe;
d) in einer Stellung in Druckbelastung
e) in Endstellung Druckstufe;
- Figur 5:: die Darstellung einer beheizbaren Stoßdämpfereinheit mit einem Stoßdämpfer gemäß Figur 1;
a) in einer räumlichen Darstellung
b) in der Vorderansicht;
c) im Längsschnitt;
- Figur 6:: die Darstellung der Stoßdämpfereinheit aus Figur 5
a) in Neutralstellung;
b) in einer Stellung in Zugbelastung:
c) in Endstellung Zugstufe;
d) in einer Stellung in Druckbelastung
e) in Endstellung Druckstufe;
- Figur 7: die Darstellung der Stoßdämpfereinheit aus Figur 5 in Explosionsdarstellung
- Figur 8:: die Darstellung eines Kraft-Weg-Diagramms des Stoßdämpfers aus Figur 1;
- Figur 9:: die Darstellung eines Kraft-Temperatur-Diagramms des Stoßdämpfers aus Figur 1;
- Figur 10:: ein Kraft-Geschwindigkeitsdiagramm einer Dämpfungsmessung der Stoßdämpfereinheit aus Figur 1.
- Figur 11:: die schematische Darstellung eines Elektrorollers;
- Figur 12:: die Darstellung des Lenkers des Elektrorollers aus Figur 10 im Längsschnitt und

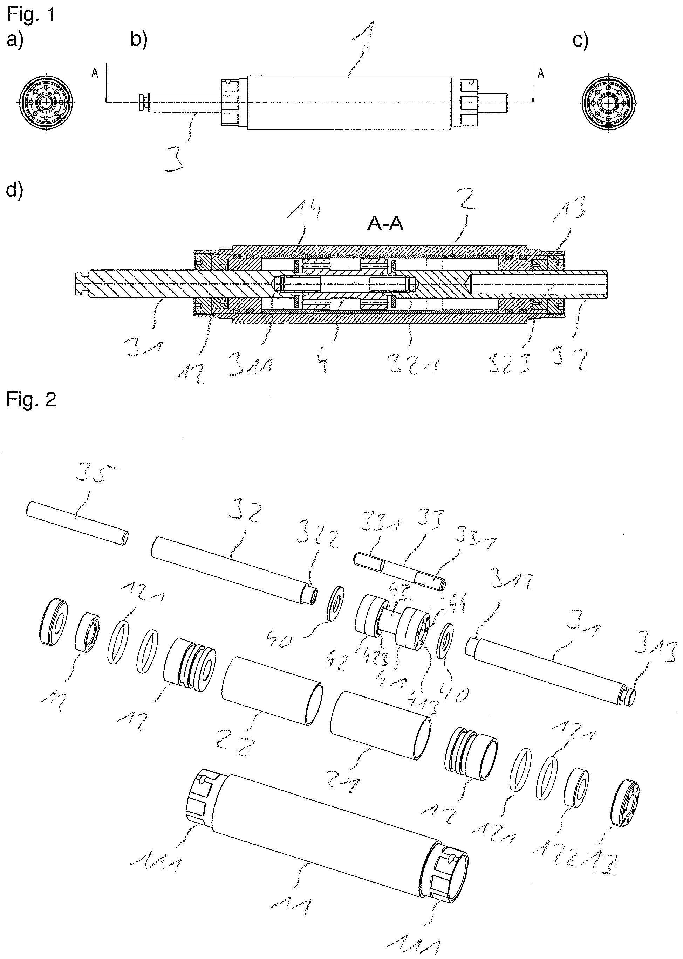

Der als Ausführungsbeispiel gemäß Figur 1 gewählte Stoßdämpfer umfasst einen mit einem Fluid, vorliegend Hydrauliköl gefüllten Zylinder 1, in den eine Dämpferhülse 2 eingebracht ist, durch die eine Kolbenstange 3 verschiebbar geführt ist. Auf der Kolbenstange ist ein Kolbenmodul 4 mit zwei beabstandet zueinander angeordneten Kolben 41, 42 angeordnet, die mit Axialbohrungen 413, 423 versehen sind und an deren jeweils nach außen gerichteter Seite eine Verschlussscheibe 40 auf der Kolbenstange 3 axial verschiebbar gelagert ist.

Der Zylinder 1 umfasst ein Zylinderrohr 11, das an beiden Enden jeweils mit einem Dichtungs- und Führungspaket 12 verschlossen ist, das über zwei O-Ringe 121 gegenüber dem Zylinderrohr 11 abgedichtet ist, und das über einen hydraulischen Dichtring 122 gegenüber der radialen und axialen beweglichen Kolbenstange 3 abgedichtet ist. Die Dichtungs- und Führungspakete 12 sind jeweils über ein Verschlussstück 13 axial in dem Zylinderrohr 11 fixiert. Zwischen den beidseitig angeordneten Dichtungs- und Führungspaketen 12 ist die Dämpferhülse 2 in dem Zylinderrohr 11 axial gehalten. Außen ist der Zylinder 1 an beiden Enden mit einer unrunden Anschlusskontur 111 versehen, die vorliegend aus einer Anordnung von umlaufend eingebrachten Einkerbungen gebildet ist.

Die Dämpferhülse 2 ist im Ausführungsbeispiel aus zwei identisch ausgeführten Dämpferhülsenhälften 21, 22 gebildet, die aus einem thermoplastischen Kunststoff, vorliegend Polyamid hergestellt sind und jeweils einen sich in axial konisch erweiternden Innendurchmesser aufweisen. Die beiden Dämpferhülsenhälften 21, 22 sind zueinander um 180° verschwenkt aneinandergesetzt, sodass die so gebildete Dämpferhülse 2 einen von der Mitte sich zu beiden Seiten konisch verjüngenden Innendurchmesser aufweist. Der Außendurchmesser der Dämpferhülse 2 ist etwa 2 Prozent geringer gegenüber dem Innendurchmesser des Zylinderrohres 11, wodurch zwischen dem Zylinderrohr 11 und der Dämpferhülse 2 ein Mantelspalt 14 gebildet ist. Die Dämpferhülse 2 ist so axial fixiert schwimmend in dem Zylinderrohr 11 gehalten.

Die Kolbenstange 3 umfasst zwei Kolbenstangenstücke 31, 32, die über ein Verbindungszylinderstück 33 verschraubt sind. Hierzu weist das Verbindungszylinderstück 33 an beiden Enden einen Gewindezapfen 331 auf, der jeweils in eine hierfür in den Kolbenstangenstücken 31, 32 vorhandene axiale Gewindesackbohrung 311, 321 eingeschraubt ist. Das erste Kolbenstangenstück 31 weist an seinem der Gewindesackbohrung 311 gegenüberliegenden Ende einen Verbindungszapfen 313 zum Anschluss an eine Verbindungsstange eines Federmoduls auf.

Auf das Verbindungszylinderstück 33 ist das Kolbenmodul 4 aufgebracht, das hierzu eine axiale Durchbohrung 44 aufweist, durch die das Verbindungszylinderstück 33 geführt ist. Die beiden Kolbenstangenstücke 31, 32 weisen an ihrem jeweils mit dem Verbindungszylinderstück 33 verschraubten Ende einen durchmesserreduzierten Absatz 312, 322 auf, auf dem jeweils eine Verschlussscheibe 40 axial verschieblich gelagert ist.

Das Kolbenmodul 4 besteht aus zwei Kolben 41, 42, die über ein zylindrisches Distanzstück 43 beabstandet zueinander miteinander verbunden sind. Die Kolben 41, 42 sind im Wesentlichen identisch ausgebildet und weisen einen zylindrischen Abschnitt 411, 421 auf, an den sich ein konisch sich verjüngender Abschnitt 412, 422 anschließt. Die Kolben 41, 42 sind um 180 Grad verschwenkt zueinander gegenüberliegend angeordnet, sodass der sich verjüngende Abschnitt 412, 422 jeweils nach außen gerichtet ist. In die Kolben 41, 42 sind jeweils radial beabstandet zu dem Distanzstück 43 umlaufend regelmäßig beabstandet zueinander Axialbohrungen 413, 423 eingebracht.

Bei Bewegung der Kolbenstange 3 in Zugrichtung (Zugbelastung) wird das in dem Zylinder befindliche Fluid durch den in Bewegungsrichtung vorderen ersten Kolben 41 komprimiert. Hierdurch wird die vor dem ersten Kolben 41 angeordnete Verschlussscheibe 40 gegen den ersten Kolben 41 gepresst, wodurch die in dem ersten Kolben 41 befindlichen Axialbohrungen 413 verschlossen werden. Das Fluid wird durch den zwischen dem zylindrischen Abschnitt 411 des ersten Kolbens 41 und der Innenwand der ersten Dämpferhülsenhälfte 21 hindurchgepresst. Durch den axial sich in Richtung Verschlussscheibe 40 verjüngten konischen Abschnitt 412 ist das Einfließen des Fluids in den Ringspalt unterstützt. Durch den sich in Axialrichtung ändernden Innendurchmesser der ersten Dämpferhülsenhälfte 21 ist eine sich über den Weg ändernde Breite des zwischen dem ersten Kolben 41 und der Innenwand der ersten Dämpferhülsenhälfte 21 gebildeten Ringspalts erzielt, wodurch eine sich über den Weg veränderliche Dämpfung bewirkt ist. Das Fluid kann anschließend ungehindert durch die Axialbohrungen 423 des zweiten Kolbens 42 hindurchfließen, wobei die diesem zugeordnete Verschlussscheibe 40 durch das Fluid von dem zweiten Kolben 42 weggedrängt wird. Der zweite Kolben 42 ist hier im Bereich des maximalen Innendurchmessers der durch die beiden Dämpferhülsenhälften 21, 22 zusammengesetzten Dämpferhülse 2 positioniert, sodass der zwischen dem zweiten Kolben 42 und der Innenwand der Dämpferhülse 2 gebildete Ringspalt eine maximale Breite aufweist, durch den das Fluid hindurchfließen kann.

Bei Bewegung der Kolbenstange 3 in Druckrichtung ist der vorstehende Ablauf umgekehrt, wobei das in dem Zylinder 1 befindliche Fluid nun durch den in Bewegungsrichtung vorderen zweiten Kolben 42 komprimiert wird, dessen Axialbohrungen 423 von der vor diesem angeordnete Verschlussscheibe 40 verschlossen sind. Das Fluid wird durch den zwischen dem zylindrischen Abschnitt 421 des zweiten Kolbens 42 und der Innenwand der zweiten Dämpferhülsenhälfte 22 hindurchgepresst. Durch den sich in Axialrichtung ändernden Innendurchmesser der zweiten Dämpferhülsenhälfte 22 ist wiederum eine sich über den Weg ändernde Breite des zwischen dem zweiten Kolben 42 und der Innenwand der zweiten Dämpferhülsenhälfte 22 gebildeten Ringspalts erzielt, wodurch wiederum eine sich über den Weg veränderliche Dämpfung bewirkt ist. Durch die Innenkontur der Dämpferhülse 2 ist die Dämpfungswirkung des Stoßdämpfers über den Weg bestimmt.

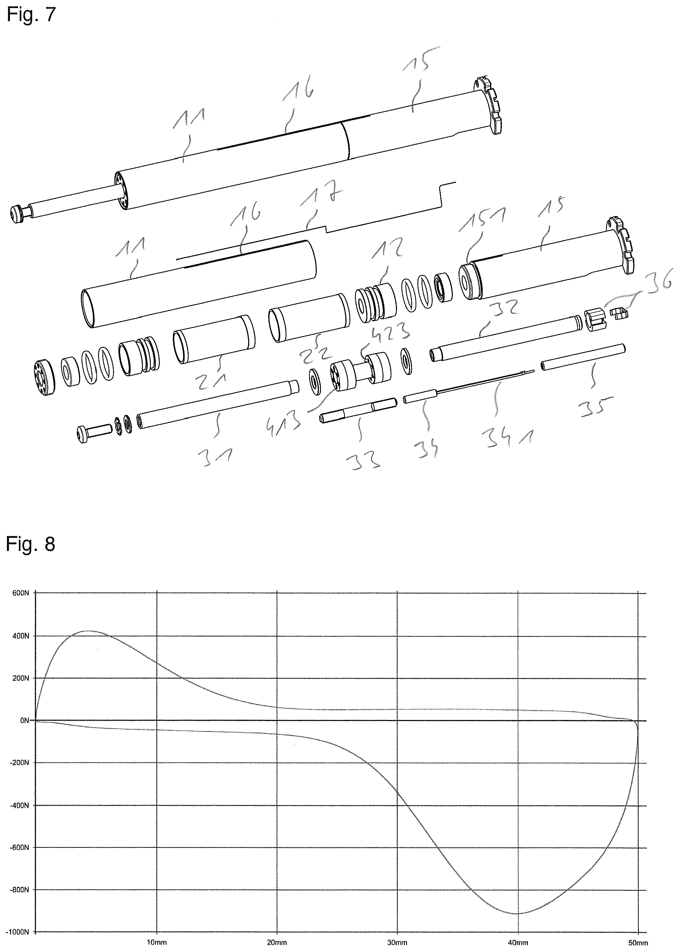

Das Dämpfungsverhalten des Stoßdämpfers ist beispielhaft in Figur 8 dargestellt: Bei einem Stoß (Druckstufe) erfolgt zunächst über den Dämpferweg eine Verminderung der Dämpfungskraft. Eine zur Stoßdämpfung eingesetzte Feder ist in ihrem Federweg nicht beeinträchtigt. Erst ab etwa 20 mm Dämpferweg erfolgt eine zunehmende Verengung des Spaltes zwischen der ersten Dämpferhülsenhälfte 22 und dem ersten Kolben 42, wodurch eine progressive Dämpfung einsetzt.

In der Zugstufe wird das Dämpfungsverhalten durch die zweite Dämpferhülsenhälfte 21 beeinflusst. Nach etwa 30 mm zurückgelegten Dämpferweg erfolgt eine zunehmende Verengung Verengung des Spaltes zwischen der zweiten Dämpferhülsenhälfte 21 und dem zweiten Kolben 41, wodurch wiederum eine progressive Dämpfung einsetzt.

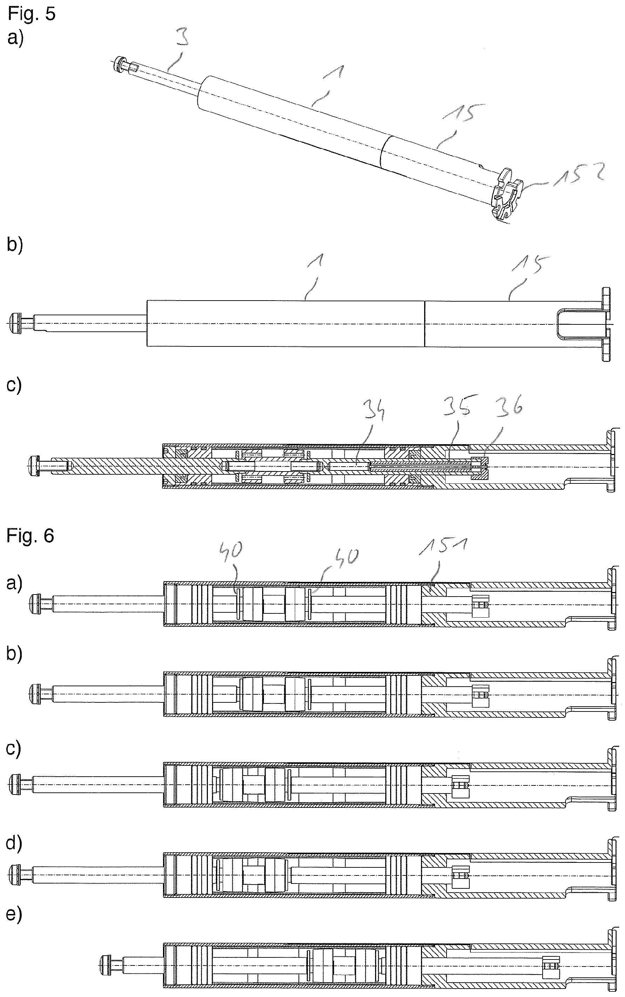

Im Ausführungsbeispiel gemäß Figur 5 ist an dem Zylinder 1 ein Halterohr 15 angestellt, das an einem Ende einen Gewindeabsatz 151 aufweist, mit dem es an Stelle des Verschlussstücks 15 mit dem Zylinder 1 verschraubt ist. An seinem anderen Ende ist an dem Halterohr 15 ein radial nach außen kragender Befestigungsflansch 152 angeordnet. In die Sackbohrung 323 des zweiten Kolbenstangenstücks 32 ist eine Heizpatrone 34 eingesetzt, die Anschlusskabel 341 zur Stromversorgung aufweist. Hinter die Heizpatrone 34 ist in die Sackbohrung 323 ein Stabmagnet 35 in die Sackbohrung 323 eingebracht, der eine axiale Durchbohrung aufweist, durch die Anschlusskabel 341 geführt sind. Endseitig sind an dem zweiten Kolbenstangenstück 32 Schleifkontakte 36 angeordnet, die mit den Anschlusskabeln 341 elektrisch verbunden sind. Über die Schleifkontakte 36 ist die Heizpatrone 34 zur Stromversorgung mit einer - nicht dargestellten - Regel- und Steuereinheit verbunden.

Außen ist in das Zylinderrohr 11, übergehend in das Halterohr 15 eine Nut 16 eingebracht, die einen Temperatursensor 17 aufnimmt, vorliegend einen NTC-Widerstand, d.h. einen mit einem negativen Temperaturkoeffizienten. Hierbei steigt der Widerstandswert mit abnehmender Temperatur. Der Temperatursensor 17 ist mit der - nicht dargestellten - Regel- und Steuereinheit verbunden, an die er kontinuierlich die indirekt ermittelte Ist-Fluidtemperatur liefert.

Durch die über die - nicht dargestellte - Regel- und Steuereinheit ansteuerbare Heizpatrone 34 ist die Temperatur des Fluids und damit dessen Viskosität einstellbar, wodurch wiederum das Dämpfungsverhalten des Stoßdämpfers zusätzlich beeinflussbar ist.

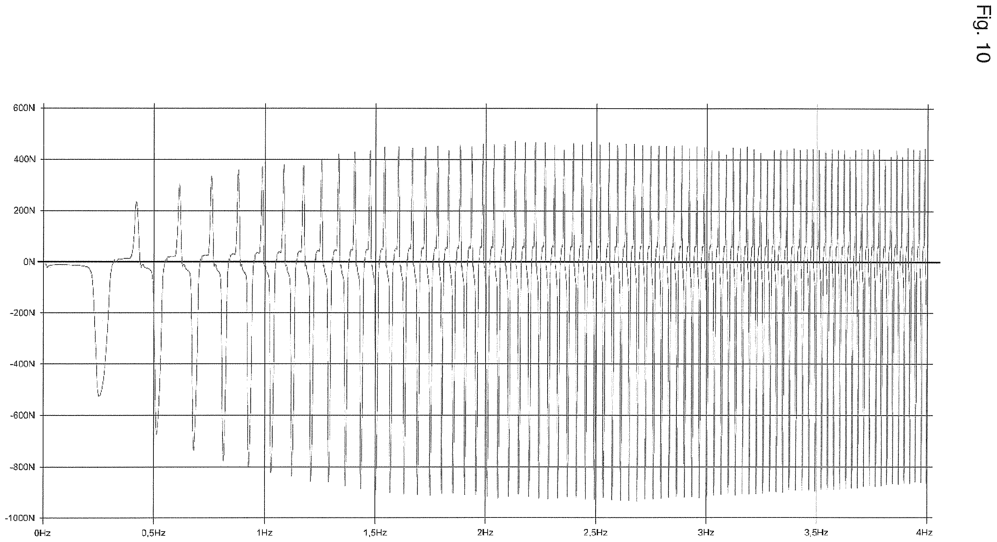

In Figur 10 ist ein Kraft-/ Geschwindigkeitsdiagram einer Dämpfermessung des zuvor beschriebenen Stoßdämpfers gezeigt, der über einen Kurbelwellenantrieb angeregt wurde. Dabei wurde die Kurbelwellengeschwindigkeit über eine Rampe von 0Hz bis 4Hz linear gesteigert. Wie aus dem Diagramm ersichtlich ändert sich das Verhalten des Dämpfers ab ca. 2 Hz von einer Kraft/Geschwindigkeits- und Wegeabhängigkeit in eine reine Kraft/Wegeabhängigkeit. Die Geschwindigkeitsabhängigkeit ist eliminiert.

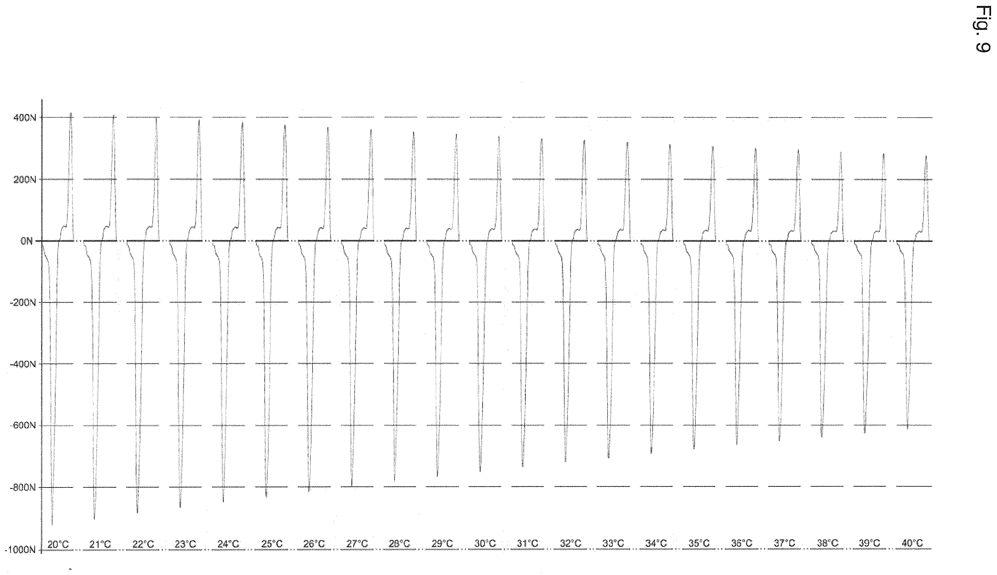

Über die im Ausführungsbeispiel gemäß Figur 5 angeordnete Heizpatrone ist die Temperatur des Fluids und damit dessen Viskosität veränderbar. In Figur 9 ist der Stoßdämpfer bei gleichmäßiger Erregung durch einen Kurbelwellenantrieb bei geänderten Fluidtemperaturen gezeigt. Wie unmittelbar ersichtlich ist, nimmt der Widerstand des Stoßdämpfers mit zunehmender Fluidtemperatur ab - der Stoßdämpfer wird "weicher".

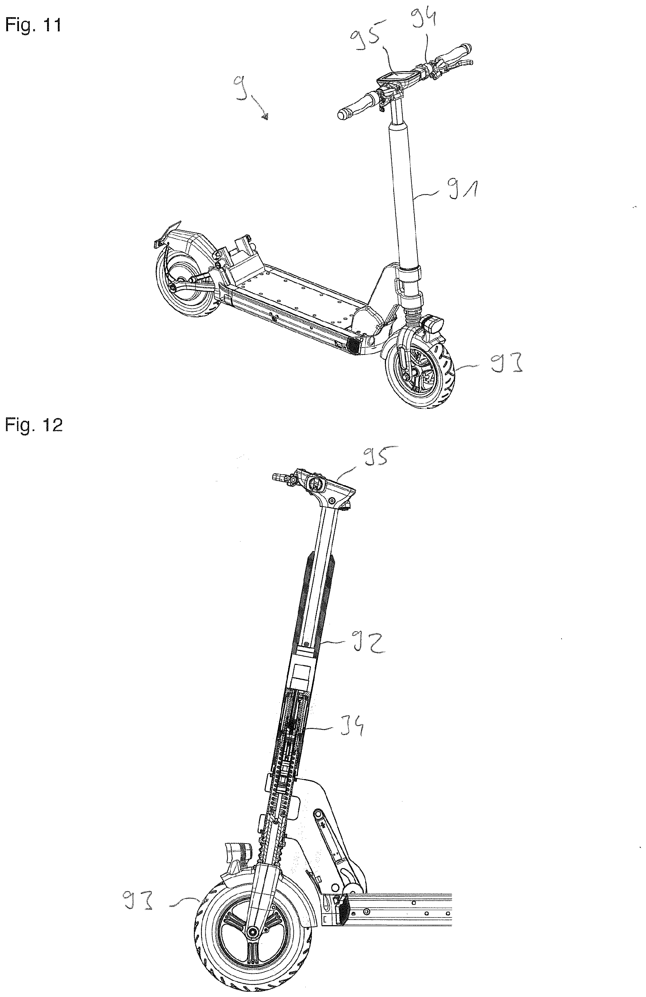

In Figur 11 ist beispielhaft ein Elektroroller 9 mit einer Lenkstange 91 gezeigt, in dessen Standrohr 92 eine Feder-Dämpfer-Anordnung mit einem Stoßdämpfer der vorgenannten Art eingesetzt ist und über die das Rad 93 mit dem Lenker 94 verbunden ist. An dem Lenker 94 ist eine Rechnereinheit 95 angeordnet, über welche die Heizpatrone 34 ansteuerbar ist. Weiterhin ist die Rechnereinheit 95 mit dem Temperatursensor 17 verbunden. Die Rechnereinheit 95 regelt die Fluidtemperatur über eine Ansteuerung der Heizpatrone 34 anhand der von dem Temperatursensor 17 gemeldeten Ist-Temperatur auf die eingestellte Vorgabetemperatur ein.

## Patentansprüche

1. Stoßdämpfer, insbesondere für Radfahrzeuge, umfassend einen mit einem Fluid befüllten Zylinder (1) und eine in diesem geführten Kolbenstange (3), wobei die Kolbenstange (3) durch den Zylinder (1) hindurchgeführt ist und beabstandet zueinander mit zwei Kolben (41, 42) versehen ist, in die umlaufend radial beabstandet zu der Kolbenstange (3) Axialbohrungen (413, 423) eingebracht sind und an deren Außenseite jeweils eine Verschlussscheibe (40) zum Verschließen der Axialbohrungen (413, 423) des zugeordneten Kolbens (41, 42) auf der Kolbenstange (3) axial beweglich gelagert ist, wobei die Zylinderinnenwand zumindest bereichsweise einen sich in Axialrichtung stetig ändernden Durchmesser aufweist, **dadurch gekennzeichnet, dass** die Zylinderinnenwand durch die Innenwand einer in den Zylinder eingebrachten Dämpferhülse (2) gebildet ist, die aus einem thermoplastischen Kunststoff hergestellt ist.

2. Stoßdämpfer nach Anspruch 1, **dadurch gekennzeichnet, dass** die Zylinderinnenwand in einem ersten Bereich einen in Axialrichtung sich konisch erweiternden und in einem sich anschließenden zweiten Bereich einen sich konisch verjüngenden Bereich aufweist.

3. Stoßdämpfer nach Anspruch 1 oder 2, **dadurch gekennzeichnet, dass** die Dämpferhülse (2) aus Polycarbonat oder Polyamid hergestellt ist.

4. Stoßdämpfer nach einem der vorgenannten Ansprüche, **dadurch gekennzeichnet, dass** der Außendurchmesser der Dämpferhülse (2) kleiner ist, als der Innendurchmesser des Zylinderrohrs (11), wodurch ein Mantelspalt (14) gebildet ist.

5. Stoßdämpfer nach einem der vorgenannten Ansprüche, **dadurch gekennzeichnet, dass** die beiden Kolben (41, 42) auf ihrer der jeweiligen Verschlussscheibe (40) zugewandten Außenseite einen axial sich konisch verjüngenden Abschnitt aufweisen.

6. Stoßdämpfer nach Anspruch 5, **dadurch gekennzeichnet, dass** die beiden Kolben (41, 42) im Wesentlichen zueinander spiegelgleich ausgebildet sind.

7. Stoßdämpfer nach einem der vorgenannten Ansprüche, **dadurch gekennzeichnet, dass** in dem Zylinder (1) steuerbare Temperiermittel zur Erwärmung des Fluids angeordnet sind.

8. Stoßdämpfer nach Anspruch 7, **dadurch gekennzeichnet, dass** die Temperiermittel innerhalb der Kolbenstange (3) angeordnet sind.

9. Stoßdämpfer nach Anspruch 7 oder 8, **dadurch gekennzeichnet, dass** die Temperiermittel eine Heizpatrone (34) und/oder ein Peltier-Element umfassen, die mit einer Schnittstelle zum Anschluss an eine Stromquelle verbunden ist.

10. Stoßdämpfer nach einem der Ansprüche 7 bis 9, **dadurch gekennzeichnet, dass** ein Temperatursensor (17) zur direkten oder indirekten Messung der Fluidtemperatur angeordnet ist.

11. Radfahrzeug, insbesondere Zweiradfahrzeug, mit wenigstens einer Radaufhängung, die einen Stoßdämpfer nach einem der vorgenannten Ansprüche aufweist.

12. Radfahrzeug nach Anspruch 11, **dadurch gekennzeichnet, dass** das Radfahrzeug ein Elektroroller (9) ist, der eine Lenkstange (91) aufweist, in der zur Abfederung von Stößen eine Feder-Dämpfer-Anordnung mit einem Stoßdämpfer nach einem der Ansprüche 1 bis 10 angeordnet ist.

13. Radfahrzeug nach Anspruch 12, **dadurch gekennzeichnet, dass** die Feder und der Stoßdämpfer der Feder-Dämpfer-Anordnung in der Lenkstange (91) hintereinander angeordnet sind.

## Claims

1. Shock absorber, in particular for wheeled vehicles, comprising a cylinder (1) filled with a fluid and a piston rod (3) guided therein, wherein the piston rod (3) is passed through the cylinder (1) and is provided, at a distance from one another, with two pistons (41, 42), in which axial bores (413, 423) are formed circumferentially at a radial distance from the piston rod (3) and on the outside of each of which a closure disc (40) is axially movably mounted on the piston rod (3) for closing the axial bores (413, 423) of the associated piston (41, 42), wherein the inner wall of the cylinder has a diameter continuously changing in the axial direction at least in some regions, **characterised in that** the inner wall of the cylinder is formed by the inner wall of a damping sleeve (2) inserted into the cylinder, which is made of a thermoplastic material.

2. Shock absorber according to claim 1, **characterised in that** the inner wall of the cylinder has, in a first region, a region conically widening in the axial direction and, in an adjoining second region, a conically tapering region.

3. Shock absorber according to claim 1 or 2, **characterised in that** the damping sleeve (2) is made of polycarbonate or polyamide.

4. Shock absorber according to one of the preceding claims, **characterised in that** the outer diameter of the damping sleeve (2) is smaller than the inner diameter of the cylinder tube (11), whereby a jacket gap (14) is formed.

5. Shock absorber according to one of the preceding claims, **characterised in that** the two pistons (41, 42) have an axially conically tapering section on their outer side facing the respective closure disc (40).

6. Shock absorber according to claim 5, **characterised in that** the two pistons (41, 42) are substantially mirror-symmetrical to one another.

7. Shock absorber according to one of the preceding claims, **characterised in that** controllable tempering means for heating the fluid are arranged in the cylinder (1).

8. Shock absorber according to claim 7, **characterised in that** the tempering means are arranged within the piston rod (3).

9. Shock absorber according to claim 7 or 8, **characterised in that** the tempering means comprise a heating cartridge (34) and/or a Peltier element, which is connected to an interface for connection to a power source.

10. Shock absorber according to one of claims 7 to 9, **characterised in that** a temperature sensor (17) is arranged for direct or indirect measurement of the fluid temperature.

11. Wheeled vehicle, in particular two-wheeled vehicle, having at least one wheel suspension, which includes a shock absorber according to one of the preceding claims.

12. Wheeled vehicle according to claim 11, **characterised in that** the wheeled vehicle is an electric scooter (9), which has a steering column (91), in which a spring-damper arrangement with a shock absorber according to one of claims 1 to 10 is arranged to cushion shocks.

13. Wheeled vehicle according to claim 12, **characterised in that** the spring and the shock absorber of the spring-damper arrangement are arranged one behind the other in the steering column (91).

## Revendications

1. Amortisseur, notamment pour véhicules à roues, comprenant un cylindre (1) rempli d'un fluide et une tige de piston (3) guidée à l'intérieur de celui-ci, sachant que la tige de piston (3) est guidée à travers le cylindre (1) et dotée de deux pistons (41, 42) situés à distance l'un de l'autre sur le pourtour desquels des orifices axiaux (413, 423) sont réalisés écartés radialement de la tige de piston (3) et sur la face extérieure de chacun desquels un disque de fermeture (40) est logé de manière à être mobile axialement sur la tige de piston (3) pour fermer les alésages axiaux (413, 423) du piston afférent (41, 42), sachant que la paroi intérieure du cylindre présente au moins par endroits un diamètre qui change continuellement en direction axiale, **caractérisé en ce que** la paroi intérieure du cylindre est formée par la paroi intérieure d'une douille d'amortisseur (2) fabriquée en thermoplastique et introduite dans le cylindre.

2. Amortisseur selon la revendication 1, **caractérisé en ce que** la paroi intérieure du cylindre présente une première zone qui s'élargit de manière conique en direction axiale, suivie d'une deuxième zone qui se rétrécit de manière conique.

3. Amortisseur selon la revendication 1 ou 2, **caractérisé en ce que** la douille d'amortisseur (2) est fabriquée en polycarbonate ou en polyamide.

4. Amortisseur selon l'une des revendications précédentes, **caractérisé en ce que** le diamètre extérieur de la douille d'amortisseur (2) est inférieur au diamètre intérieur du tube de cylindre (11), formant une fente d'enveloppe (14).

5. Amortisseur selon l'une des revendications précédentes, **caractérisé en ce que** les deux pistons (41, 42) présentent sur leur face extérieure tournée vers le disque de fermeture respectif (40) une section qui se rétrécit axialement de manière conique.

6. Amortisseur selon la revendication 5, **caractérisé en ce que** les deux pistons (41, 42) sont pour l'essentiel formés symétriquement l'un par rapport à l'autre.

7. Amortisseur selon l'une des revendications précédentes, **caractérisé en ce que** des agents de thermorégulation contrôlables sont disposés dans le cylindre (1) pour réchauffer le fluide.

8. Amortisseur selon la revendication 7, **caractérisé en ce que** les agents de thermorégulation sont disposés à l'intérieur de la tige de piston (3).

9. Amortisseur selon la revendication 7 ou 8, **caractérisé en ce que** les agents de thermorégulation comprennent une cartouche chauffante (34) et/ou un élément Peltier relié/reliée à une interface pour être raccordés à une source de courant.

10. Amortisseur selon l'une des revendications 7 à 9, **caractérisé en ce qu'**un capteur de température (17) est disposé pour mesurer directement ou indirectement la température du fluide.

11. Véhicule à roues, notamment véhicule à deux roues, avec au moins une suspension de roue qui présente un amortisseur selon l'une des revendications précédentes.

12. Véhicule à roues selon la revendication 11, **caractérisé en ce que** le véhicule à roues est une trottinette électrique (9) qui présente un guidon (91) dans lequel un ensemble d'amortisseur à ressort avec un amortisseur selon l'une des revendications 1 à 10 est disposé pour amortir des chocs.

13. Véhicule à roues selon la revendication 12, **caractérisé en ce que** le ressort et l'amortisseur de l'ensemble d'amortisseur à ressort sont disposés l'un derrière l'autre dans le guidon (91).
